# EUROPEAN PATENT SPECIFICATION

(11) **EP 0 312 029 B1**
(45) Date of publication and mention of the grant of the patent: **04.05.1994**
(21) Application number: 88116959.3
(22) Date of filing: 12.10.1988
(51) Int. Cl.: H05B 3/48, B29C 45/27

(54) **Heater for injection molding machine**
Heizgerät für eine Spritzgiessmaschine
Appareil de chauffage pour une machine de moulage par injection

(30) Priority: 12.10.1987 JP 254682/87
(43) Date of publication of application: 19.04.1989
(73) Proprietor: SUMITOMO HEAVY INDUSTRIES, LTD, Tokyo 100 (JP)
(72) Inventor: Sumen, Hiroyoshi, Chiba-shi (JP); Hara, Hitoshi, Funabashi-shi (JP)
(74) Representative: Henkel, Feiler, Hänzel & Partner

(56) References cited:
- AT-B- 205 619
- DE-A- 1 924 202
- US-A- 2 683 673
- US-A- 4 583 284

## Description

### BACKGROUND OF THE INVENTION

This invention relates to a heater for heating the section to be heated, such as an injection nozzle or a plasticizing cylinder in an injection molding machine.

It is generally known that the smaller the outer diameter of the heating cylinder or the nozzle of an injection molding machine, the more desirable. When injection is performed by inserting the nozzle into the mold, in particular, the outer diameter of the nozzle directly affects the strength of the mold or the effective area of the cavity for injection molding since an inserting hole of a size that fits the outer nozzle diameter must be provided in the mold.

In view of this, it is conventionally general practice to use coil heaters which are as thin as possible or the like in heating the nozzle since a bulky heater will lead to an excessively large outer nozzle diameter.

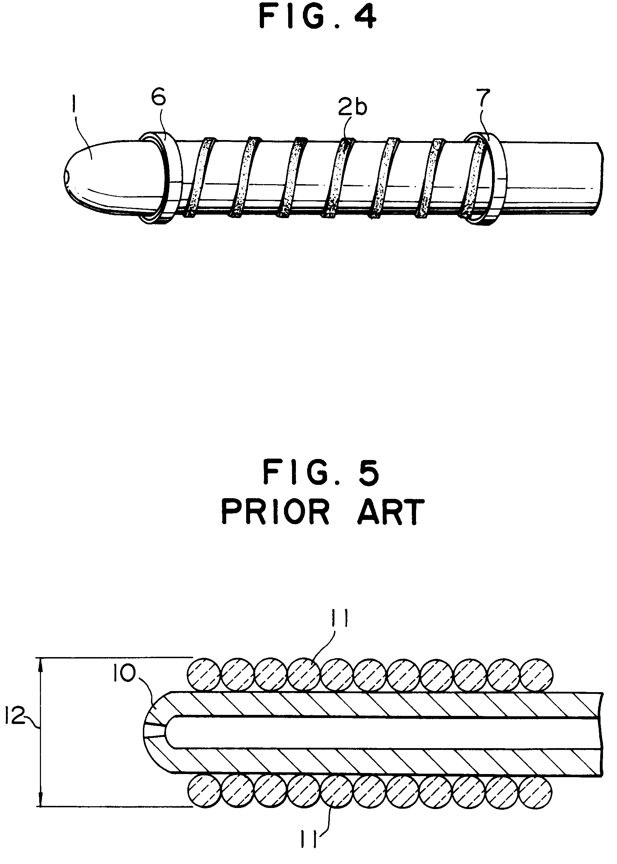

As shown in Fig. 5, the outer diameter 12 of a nozzle 10 is kept as small as possible by winding an extremely thin coil heater 11 around the outer peripheral surface of the nozzle 10, thus bringing the coil into close contact with the nozzle, making use of the elasticity of the coil. However, the adherence of the coil heater 11 to the nozzle 10 is subject to becoming loose or being displaced when used for long time, making it impossible to retain the initial conditions for a long period of time.

US-A-4 583 284 discloses a heater for an injection molding machine for molding by injecting molten plastic into a mold, said heater comprising a helical electrically conductive film on the outer peripheral surface of the molding machine sections to be heated such as the heating cylinder and the injection nozzle.

DE-A-19 24 202 discloses a sprayed conductive coat in connection with an electrical heating device.

When the whole surface of a section to be heated is coated with an electrically conductive film, uneven heating due to differences in electrical resistance can occur unless the thickness of the film is uniform over the entire surface.

### SUMMARY OF THE INVENTION

It is the object of the present invention to provide a heater for an injection molding machine wherein uneven heating is avoided.

This object is solved by a heater for an injection molding machine as claimed in claim 1.

### BRIEF DESCRIPTION OF THE DRAWINGS

Fig. 1 is a longitudinal section showing an embodiment of a heater for heating the injection nozzle of an injection molding machine;
Fig. 2 is a perspective view of the embodiment shown in Fig. 1, with its electrically conductive ceramic film exposed by removing the outer insulating ceramic film thereof;
Fig. 3 is a perspective view of an embodiment of this invention having a longitudinally striped electrically conductive ceramic film, with the outer insulating ceramic film removed;
Fig. 4 is a perspective view of an embodiment of a heater having a helical electrically conductive ceramic film, with the outer insulating ceramic film removed;
Fig. 5 is a longitudinal section schematically showing the nozzle heater of a conventional injection molding machine;
Fig. 6 is an embodiment of a heater having two separate electrically conductive ceramic films formed in the front and rear sections of the surface of the injection nozzle; and
Fig. 7 is a perspective view of the embodiment shown in Fig. 6, with the outer insulating ceramic film removed.

### DESCRIPTION OF THE PREFERRED EMBODIMENTS

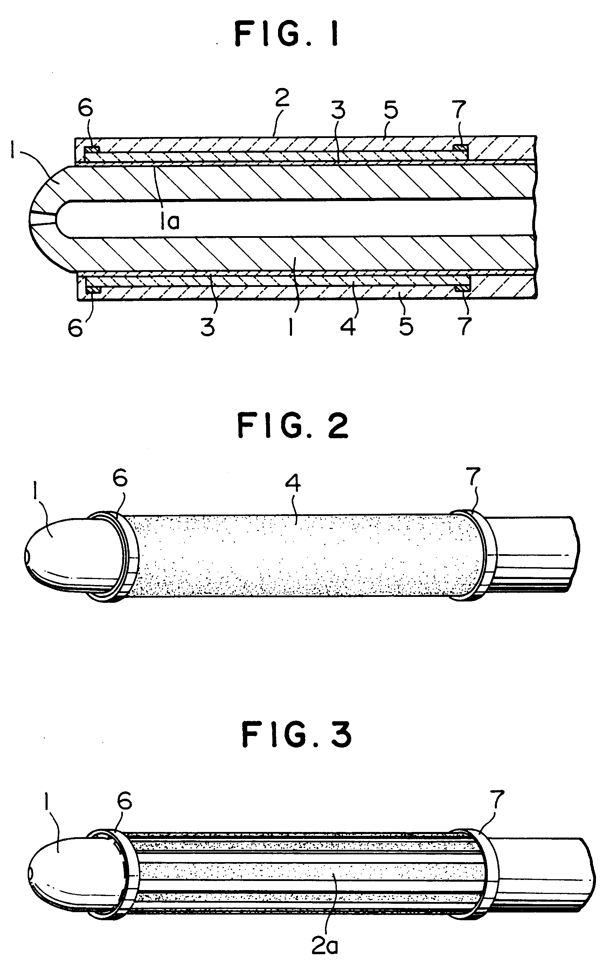

As shown in Figs. 1 and 2, a film heater 2 consisting of a ceramic material is formed by flame spraying on the outer peripheral surface of a nozzle 1 for injecting molten plastic into a mold.

This film heater 2 is composed of an insulating film 3, the innermost layer, formed by flame spraying on the outer peripheral surface 1a of the nozzle 1, an electrically conductive ceramic film 4, the middle layer, formed by flame spraying on the insulating ceramic film 3, and an insulating ceramic film 5, the outermost layer, formed by flame spraying on the electrically conductive ceramic film 4.

Electrodes 6 and 7 for feeding power are provided at both ends of the electrically conductive ceramic film 4. The nozzle 1 and the electrically conductive film 4 are insulated from each other by film spraying the insulating ceramic film 3 on the outer peripheral surface of the nozzle 1.

Figs. 3 shows an embodiment of this invention. Since this embodiment and the heater of Fig. 4 are basically identical with that shown in Figs. 1 and 2, only the differences between them will be explained. In the embodiment shown in Fig. 3, the electrically conductive ceramic film is in the form of a plurality of longitudinal stripes 2a connecting the electrodes 6 and 7.

In the heater shown in Fig. 4, the electrically conductive ceramic film is in the form of a multitude of helical strips 2b. While in Figs. 3 and 4 the electrically conductive ceramic films are shown as films directly formed on the outer peripheral surface of the nozzle 1, it goes without saying that the electrically conductive ceramic films may be formed between the insulating ceramic films, as in the embodiment shown in Figs. 1 and 2.

Since the heater in accordance with this invention is formed by flame spraying an electrically conductive ceramic material, it is formed substantially in one body with the section to be heated such as the heating cylinder or the nozzle, so that its adhering force is not weakened even after long-term use. Since the thickness of the ceramic film heater 2 is 0.5 mm or so, it results in a nozzle heater with a small outer nozzle diameter. Furthermore, a ceramic heater of this type is formed by flame spraying, so that it does not burn out.

When the whole surface of the section to be heated is coated with an electrically conductive ceramic, uneven heating due to differences in electrical resistance can occur unless the thickness of the film is uniform over the surface. This can be avoided by forming the electrically conductive ceramic film as substantially linear conductors in the form of longitudinal stripes or helical strips. Uneven heating can then be mitigated even when there is some variation in the film thickness.

Since, as described above in detail, the heater for an injection molding machine of this invention is formed as a film heater by flame spraying a ceramic material on the outer peripheral surface of the nozzle, it is not subject to deterioration in adhering force due to the long-term use thereof, which has been a problem in conventional coil heaters. It can consequently retain the initial conditions for a long period of time. Furthermore, since the thickness of the film heater can be limited to 0.5 mm or so, it can give a nozzle heater with a small outer nozzle diameter. At the same time, any accident due to burning out of a heater can be avoided.

The heater of this invention can consequently lead to an injection molding machine nozzle of high practical value.

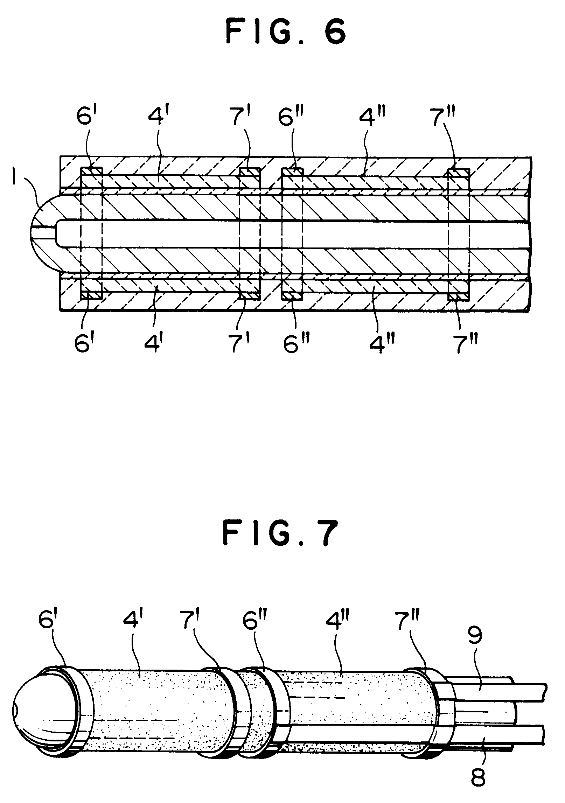

Figs. 6 and 7 show an embodiment in which two separate electrically conductive ceramic films 4' and 4'' are provided in the longitudinally front and rear section of the outer peripheral surface of the nozzle 1. The embodiment includes electrodes 6' and 7' at both ends of the electrically conductive ceramic film 4' and electrodes 6'' and 7'' at both ends of the electrically conductive ceramic film 4''. The electrodes 6'' and 7'' are respectively connected to the power source through heat-proof converted ribbon conductors 8 and 9 extending longitudinally rearwards. The electrodes 6' and 7' are also connected to the power source through heat-proof covered ribbon conductors extending longitudinally rearwards on the other side of the drawing. This embodiment enables the entire injection nozzle to be heated as evenly as possible.

Since the front end of the injection nozzle is in contact with a mold which is set at a temperature which is far lower than the melting point of the molten material such as plastic, its temperature is normally lower than the set temperature value of the injection nozzle by tens of degrees C. On the other hand, there is, in the rear section of the injection nozzle, heat transmission from the heating cylinder. Furthermore, the heat radiation from the injection nozzle is low, so that the injection nozzle tends to be overheated. Thus there is a temperature difference of tens of degrees C between the front end and the rear section of the injection nozzle. As a result, when conducting temperature control using one heater and one temperature sensor, the following problems are encountered: when the temperature at the front end of the injection nozzle is set to an appropriate value, the resin temperature in the rear section of the injection nozzle becomes rather high, resulting in "burning" of the resin. At the same time, the resin coming out of the front end of the injection nozzle drips from the nozzle outlet, a phenomenon called "cobwebbing" or "dripping". When, on the other hand, the temperature of the rear section of the nozzle is set to an appropriate value, the resistance at the nozzle front end is augmented, resulting in an increased pressure drop, which leads to increased variation in molding.

Since in this embodiment the front end and the rear section of the nozzle are separately heated with individual heaters, the entire nozzle can be set to a uniform optimum temperature by setting the nozzle front end to a high temperature and the nozzle rear section to a normal temperature. The above described problem which is involved when only one heater is provided can thus be overcome. While in the embodiment shown in Figs. 6 and 7 the entire peripheral surface of the injection nozzle is coated with an electrically conductive ceramic material, the two conductive ceramic films in the front and rear sections of the nozzle may be in the form of longitudinal stripes or helical strips as in Figs. 3 and 4.

## Claims

1. A heater (2) for an injection molding machine for molding by injecting molten plastic into a mold, said heater comprising an electrically conductive film (4) on the outer peripheral surface (1a) of the molding machine sections to be heated such as the heating cylinder and the injection nozzle (1)
characterized in that
said electrically conductive film (4) is made of ceramic formed by flame spraying and the electrically conductive ceramic film is formed as longitudinal stripes (2a).

2. A heater for an injection molding machine as claimed in claim 1, wherein the temperature of the front and rear sections of the injection nozzle (1) is separately controlled with two separate ceramic films (4', 4'') formed in the front and rear sections of the outer peripheral surface (1a) of the injection nozzle (1).

3. A heater for an injection molding machine as claimed in claim 1 or 2, wherein the electrically conductive ceramic film (4) is formed between insulating ceramic films (3, 5).

## Patentansprüche

1. Heizgerät (2) für eine Spritzgießmaschine zum Spritz-Formen durch Einspritzen von Kunststoffschmelze in eine Spritz-Form, wobei das Heizgerät einen elektrisch leitenden Film (4) auf der Außenumfangsfläche (1a) der zu beheizenden Gießmaschinenabschnitte, wie Heizzylinder und Spritzdüse (1), umfaßt,
dadurch gekennzeichnet, daß
der elektrisch leitende Film (4) aus einem durch Flammsprühen ausgebildeten Keramikmaterial geformt ist und der elektrisch leitende Keramikfilm in Form längsverlaufender Streifen (2a) ausgebildet ist.

2. Heizgerät für eine Spritzgießmaschine nach Anspruch 1, wobei die Temperatur der vorderen und hinteren Abschnitte oder Bereiche der Spritzdüse (1) mittels zweier getrennter Keramikfilme (4', 4''), die in den vorderen und hinteren Abschnitten oder Bereichen der Spritzdüse (1) geformt sind, getrennt geregelt wird.

3. Heizgerät für eine Spritzgießmaschine nach Anspruch 1 oder 2, wobei der elektrisch leitende Keramikfilm (4) zwischen isolierenden Keramikfilmen (3, 5) geformt ist.

## Revendications

1. Elément chauffant (2) pour une machine à mouler par injection destinée à mouler une matière plastique fondue par injection dans un moule, ledit élément chauffant comprenant un film électroconducteur (4) prévu sur la surface périphérique extérieure (1a) des parties de la machine à mouler qui doivent être chauffées, par exemple le cylindre chauffant et la buse d'injection (1), caractérisé en ce que ledit film électroconducteur (4) est fait d'une céramique formée par pulvérisation à la flamme et le film électroconducteur est formé sous la forme de bandes longitudinales (2a).

2. Elément chauffant pour une machine à mouler par injection selon la revendication 1, dans lequel la température des parties avant et arrière de la buse d'injection (1) est commandée séparément à l'aide de deux films céramiques séparés (4', 4'') formés dans les parties avant et arrière de la surface périphérique extérieure (1a) de la buse d'injection (1).

3. Elément chauffant pour une machine à mouler par injection selon la revendication 1 ou 2, dans lequel le film céramique électroconducteur (4) est formé entre des films céramiques isolants (3, 5).
